# EUROPÄISCHE PATENTSCHRIFT

(11) **EP 1 428 962 B1**
(45) Veröffentlichungstag und Bekanntmachung des Hinweises auf die Patenterteilung: **15.03.2006**
(21) Anmeldenummer: 03026343.8
(22) Anmeldetag: 18.11.2003
(51) Int. Cl.: E05C 17/30

(54) **Kolben-Zylinder-Einheit**
Piston-cylinder unit
Ensemble piston-cylindre

(30) Priorität: 14.12.2002 DE 10258523; 03.11.2003 DE 10351531
(43) Veröffentlichungstag der Anmeldung: 16.06.2004
(73) Patentinhaber: Stabilus GmbH, D-56070 Koblenz (DE)
(72) Erfinder: Born, Frank, 56379 Dienethal (DE); Muders, Paul, 56321 Rhens (DE); Stein, Andre, 56329 St. Goar-Werlau (DE); Mintgen, Rolf, 56743 Thur (DE); Schwab, Wilhelm, 56584 Neuwied (DE)
(74) Vertreter: Klein, Thomas

(56) Entgegenhaltungen:
- DE-A- 1 459 182
- DE-A- 4 239 681
- US-A- 4 856 625
- US-A- 5 620 066

## Beschreibung

Die Erfindung bezieht sich auf eine Kolben-Zylinder-Einheit mit einem geschlossenen Zylinder, in dem ein Kolben über eine radial umschließende Ringdichtung gegenüber dem Zylinder abgedichtet axial verschiebbar geführt ist und den Zylinderinnenraum in einen ersten und eine zweiten Arbeitsraum unterteilt, die beide mit einem Fluid, insbesondere mit einer hydraulischen Flüssigkeit gefüllt sind, mit einer Kolbenstange, die sich durch den Zylinderinnenraum erstreckt und stirnseitig dicht durch zumindest eine Verschlußwand des Zylinders nach außen hindurchgeführt ist, mit einem ersten Rückschlagventil, dessen Schließglied in Schließrichtung kraftbelastet und unter einem hohen Druck in dem ersten Arbeitsraum den ersten Arbeitsraum mit dem zweiten Arbeitsraum verbindend öffenbar ist, mit einem zweiten Rückschlagventil, dessen Schließglied in Schließrichtung kraftbelastet und unter einem hohem Druck im zweiten Arbeitsraum den zweiten Arbeitsraum mit dem ersten Arbeitsraum verbindend öffenbar ist, wobei die von dem Druck des Arbeitsraums wirksam beaufschlagbare Fläche des Schließglieds des ersten und/oder zweiten Rückschlagventils während dessen Öffnungshubes vergrößerbar ist und wobei das Schließglied ein Stufenkolben ist, der in einer entsprechenden Stufenbohrung verschiebbar angeordnet ist und dessen Stufen stirnseitige wirksam vom Druck des Arbeitsraums beaufschlagbare Flächen aufweisen, wobei beginnend in der Schließstellung und der Druckbeaufschlagung der kleinsten Stufe mit zunehmendem öffnungshub des Stufenkolbens zunehmend weitere Stufen des Stufenkolbens druckbeaufschlagbar sind.

Derartige Kolben-Zylinder-Einheiten finden z.B. als stufenlose Türfeststeller für Kraftfahrzeugtüren verwendung. Dabei sind bei unbetätigter Tür die beiden Rückschlagventile geschlossen und die Tür in der momentan eingenommenen Stellung gehalten. Wird die Tür manuell beaufschlagt um aus dieser Stellung herausbewegt zu werden, kommt es dadurch zu einem Druckaufbau in einer Arbeitskammer und durch diesen Druck zu einem Öffnen des dieser Arbeitskammer zugeordneten Ventils. Dabei kann Fluid aus dieser Arbeitskammer in die andere Arbeitskammer strömen.
Zum Öffnen des Ventils muß in der Arbeitskammer ein Druck aufgebaut werden, der die Kraftbelastung des Schließglieds in Schließrichtung überwindet. Reduziert sich die Kraft der manuellen Beaufschlagung der Tür unter ein bestimmtes Maß, ohne daß die Türbewegung beendet wird, reduziert sich der Druck in der Arbeitskammer derart, daß auch das Rückschlagventil schließt und die Türbewegung durch die Kolben-Zylinder-Einheit blockiert wird, auch wenn eine weitere Türbewegung noch gewünscht wird.

Aus der US-A-5 620 066 und der DE 42 39 681 A ist, eine Kolben-Zylinder-Einheit der eingangs genannten Art bekannt.

Aus der DE 14 59 182 A ist ein Türfeststeller mit einer Kolben-Zylinder-Einheit bekannt, die ein als Doppelventil ausgebildetes Kolbenventil aufweist, durch welches ein Druckmittelraum mit dem anderen Druckmittelraum verbindbar ist.

Aus der US-A-4 856 625 eine Kolben-Zylinder-Einheit mit einem die beiden Kammern des Zylinders verbindenden Ventil bekannt, dessen Schließglied eine Schließfläche aus einem Elastomer besitzt.

Aufgabe der Erfindung ist es daher eine Kolben-Zylinder-Einheit der eingangs genannten Art zu schaffen, deren erstes und/oder zweiten Rückschlagventil einen geringeren Offenhaltungsdruck zum Offenhalten des Rückschlagventils erfordert, als dem öffnungsdruck zum Öffnen des Rückschlagventils.

Diese Aufgabe wird erfindungsgemäß mit einem einfachen Aufbau dadurch gelöst, daß eine oder mehrere Stufen der Stufenbohrung eine Verbindung zur nächstgrößeren Stufe besitzt, wobei nach Erreichen jeweils eines endlichen, vorbestimmten Öffnungshubes die entsprechende Verbindung zur nächsthöheren Stufe der Stufenbohrung öffenbar ist.

Da die wirksame Fläche des Schließglieds nach Öffnung des Rückschlagventils größer wird, kann das Rückschlagventil im geöffneten Zustand durch einen geringeren Druck im Arbeitsraum in der Offenstellung gehalten werden. Dies bedeutet bei der Anwendung in einem stufenlosen Türfeststeller, daß die manuell unbetätigte Tür stabil in ihrer eingenommenen Position gehalten wird und bei z.B. unbeabsichtigter leichter Kraftbeaufschlagung die Position beibehält. Wird die Tür bewußt mit einem bestimmten Kraftaufwand bewegt, so erfolgt auch ein entsprechender hoher Druckaufbau im Arbeitsraum und ein öffnen des Rückschlagventils. Für eine weitere öffnungsbewegung ist dann nur noch ein reduzierter Kraftaufwand erforderlich.

Die Reduzierung des erforderlichen Offenhaltungsdrucks erfolgt dabei stufenweise und nicht plötzlich.

Ist zumindest die kleinste vom Druck des Arbeitsraums beaufschlagbare Fläche des Rückschlagventils ein Schließglied eines Sitzventils, so kommt es bei Erreichen des Öffnungsdrucks im Arbeitsraum zu einem schnellen Öffnen des Rückschlagventils und damit auch zu einer sofortigen Reduzierung des zum Offenhalten erforderlichen Drucks. Eine Tür kann somit nach Einleitung einer Bewegung sofort mit geringerer Kraft weiterbewegt werden.

Dabei kann in einfacher Weise die Stirnseite der kleinsten Stufe des Stufenkolbens das Schließglied bilden, das auf die einen Ventilsitz des Rückschlagventils bildende Mündung der zum Arbeitsraum führenden kleinsten Stufe der Stufenbohrung aufsetzbar ist.

Besitzt das Schließglied eine kegelartige Schließfläche, die auf den ventilsitz aufsetzbar ist, so wird im geschlossenen Zustand des Rückschlagventils ein hoher Dichtheitsgrad erreicht, der dadurch bei geringeren Herstellungstoleranzen noch vergrößert wird, wenn das Schließglied eine Schließfläche aus einem Elastomer besitzt.

Ein einfacher Aufbau mit wenigen Bauteilen wird dadurch erreicht, daß eine oder mehrere der Stufen des Stufenkolbens einen Schieber eines Schieberventils bilden, durch den die entsprechende radial in die Stufenbohrung mündende Verbindung verschließbar ist.

Um trotz Einhaltung geringerer Toleranzen eine gute Abdichtung zu erhalten, können eine oder mehrere der Stufen des Stufenkolbens an ihrer zylindrischen Mantelfläche eine radial umlaufende Ringnut aufweisen, in der ein Dichtring eingesetzt ist, der mit seinem radial umlaufenden äußeren Bereich dichtend an der Innenwand der entsprechenden Stufe der Stufenbohrung in Anlage ist.

Von der größten Stufe der Stufenbohrung kann eine radiale Verbindung in einen ringförmigen Zylinderraum münden, der zwischen der Innenwand des Zylinders und der radial umlaufenden Mantelfläche des Kolbens gebildet und durch die Ringdichtungen gegenüber den Arbeitsräumen abgedichtet ist, durch dessen Druck der Stufenkolben in Öffnungsrichtung beaufschlagbar ist, wobei die radiale Verbindung von der größten Stufe des Stufenkolbens verschließbar und in dessen größter Offnungshubstellung öffenbar ist. Von dem Zylinderraum kann das Fluid zu dem anderen Arbeitsraum strömen.

Zur einfachen Kraftbelastung in Schließrichtung kann das Schließglied durch eine am Kolben abgestützte Druckfeder, insbesondere eine Schraubendruckfeder oder eine Tellerfeder in Schließrichtung belastet sein.

Zur Dämpfung der Bewegung des Stufenkolbens kann die größte Stufe der Stufenbohrung auf der der Arbeitskammer abgewandten Seite des Stufenkolbens eine Dämpfungskammer bilden, die über eine Dämpfungsöffnung mit dem Zylinderinnenraum verbunden ist. Die Dämpfungsöffnung definiert dabei die Öffnungszeit des Rückschlagventils.

Ist die Dämpfungskammer bei Bewegung des Stufenkolbens in Schließrichtung über ein Ventil mit dem Zylinderraum verbindbar, so kann bei einer Schließbewegung schnell Fluid von dem Zylinderraum in die Dämpfungskammer strömen, was eine geringe Schließzeit des Rückschlagventils ermöglicht.

Dieses Ventil ist besonders einfach aufgebaut, wenn es einen Dichtring aufweist, der in einer Ringnut angeordnet ist, die an der zylindrischen Mantelfläche der größten Stufe des Stufenkolbens ausgebildet ist, wobei die der Dämpfungskammer abgewandte Seite des Dichtrings mit dem Zylinderraum verbindbar und der Dichtring von dem Zylinderraum zur Dämpfungskammer über- oder unterströmbar ist.

Ein besonderer Einbauraum ist für die Druckfeder nicht erforderlich, wenn die Druckfeder in der Dämpfungskammer angeordnet ist, so daß eine geringe Baulänge der Kolben-Zylinder-Einheit ermöglicht wird.

Um bei der Schließbewegung des Stufenkolbens ein Ausströmen des Fluids aus der größten Stufe der Stufenbohrung auch im letzten Schließhubbereich sicherzustellen, kann die größte Stufenbohrung auf der der Arbeitskammer zugewandeten Seite der entsprechenden Stufe des Stufenkolbens über eine Drosselöffnung mit dem Zylinderraum verbunden sein.

Die den Kolben umschließende und gegenüber dem Zylinder abdichtende Ringdichtung kann in einer Ringnut angeordnet sein, die an der zylindrischen Mantelfläche des Kolbens ausgebildet ist.

Weist die Ringdichtung dabei eine radial umlaufende Dichtlippe auf, die mit ihrem freien Ende etwa zum Arbeitsraum gerichtet federnd an der Innenwand des Zylinders in Anlage ist, so ist zwar eine Fluidströmung von dem Arbeitsraum in den auf der anderen Seite der Ringdichtung befindlichen Zylinderraum sicher abgesperrt. In umgekehrter Richtung kann das Fluid aber problemlos strömen.

Zumindest eine Stufenbohrung kann durch die Durchgangsbohrung eines zur Dämpfungskammer gerichteten Rohres gebildet sein, in der eine kleinere Stufe des Stufenkolbens verschiebbar angeordnet ist, wobei das Rohr von einem kragenartigen Bereichs des Stufenkolbens umgriffen ist, an dem radial das Rohr umschließend die nächst größere Stufe des Stufenkolbens angeordnet ist. Dies führt zu einer ineinander verschachtelten Anordnung von Stufenkolben und Stufenbohrung und damit zu einer kurzen Baulänge.

Ist dabei das Rohr an seinem der Dämpfungskammer zugewandten Endbereich mit radial durchgehenden Schlitzen ausgebildet, die die radiale Verbindung zwischen zwei Stufen der Stufenbohrung bilden, so bilden diese auf einfache Weise eine radiale Verbindung großen Querschnitts zwischen zwei Stufen der Stufenbohrung, was eine schnelle Fluidströmung und damit eine schnelle Bewegung des Stufenkolbens ermöglicht.
Eine einfache, viele Elemente in einen Bauteil zusammenfassende Ausgestaltung und damit auch eine Reduzierung des Herstellungs- und Montageaufwandes wird dadurch erreicht, daß der Stufenkolben aus einem elastomeren Werkstoff besteht und einteilig mit der Schließfläche des Schließglieds und/oder mit radial umlaufenden Dichtlippen an einer oder mehreren Stufen des Stufenkolbens ausgebildet ist.

Eine kurze Baulänge und kompakte Bauweise der Kolben-Zylinder-Einheit wird dadurch erreicht, daß der Kolben mit einer einseitigen Kolbenstange versehen ist und eine Kolbenvolumenausgleichskammer zur Aufnahme der gegenüber der Verdrängungsmenge des kolbenstangenseitigen Arbeitsraumes größeren Verdrängungsmenge des kolbenstangenfernen Arbeitsraums aufweist, wobei die Bauweise besonders kompakt ausgestaltet werden kann, wenn die Volumenausgleichskammer zwischen dem ersten und dem zweiten Rückschlagventil im Kolben angeordnet und über eine Einlaßöffnung mit dem Zylinderraum zwischen dem ersten und dem zweiten Rückschlagventil verbunden ist.

Um beim Öffnen des Rückschlagventils einen plötzlichen Druckabfall in dem Arbeitsraum und dadurch hervorgerufene störende Geräusche zu vermeiden, kann in einem ersten Teil des Öffnungshubes des Schließgliedes des Rückschlagventils der Ventildurchgang ein Drosseldurchgang sein.

Dabei kann der Drosseldurchgang in Strömungsrichtung von dem ersten Arbeitsraum zum zweiten Arbeitsraum und/oder von dem zweiten Arbeitsraum zum ersten Arbeitsraum vor und/oder hinter dem Ventilsitz des Sitzventils angeordnet sein.

Eine einfach aufgebaute Möglichkeit zur Anordnung des Drosseldurchgangs vor dem Ventilsitz besteht darin, daß der Stufenkolben einen von dem Schließglied zum Arbeitsraum gerichteten etwa zylindrischen Fortsatz aufweist, der durch die kleinste Stufe der Stufenbohrung ragt, wobei ein Ringspalt zwischen der umlaufenden Mantelfläche des Fortsatzes und der Innenwand der kleinsten Stufe der Stufenbohrung den Drosseldurchgang bildet.

Im gleichen Maße einfach aufgebaut ist ein hinter dem Ventilsitz angeordneter Drosseldurchgang erreichbar, wenn die in Strömungsrichtung von dem ersten Arbeitsraum zum zweiten Arbeitsraum und/oder von dem zweiten Arbeitsraum zum ersten Arbeitsraum hinter dem Ventilsitz des Sitzventils befindliche Stufe des Stufenkolbens einen etwa zylindrisch ausgebildeten Fortsatz aufweist, der in Öffnungsrichtung des Rückschlagventils durch einen in die zweite Stufe der Stufenbohrung ragenden koaxialen ringförmigen Kragen geführt ist, wobei ein Ringspalt zwischen der umlaufenden Mantelfläche des Fortsatzes und der Innenwand des ringförmigen Kragens den Drosseldurchgang bildet.

Ausführungsbeispiele der Erfindung sind in der Zeichnung dargestellt und werden im folgenden näher beschrieben. Es zeigen
Figur 1 einen Querschnitt im Kolbenbereich einer Kolben-Zylinder-Einheit
Figur 2 eine vergrößerte Darstellung des Kolbens der Kolben-Zylinder-Einheit nach Figur 1 im Bereich eines Rückschlagventils im Querschnitt
Figur 3 ein erstes Ausführungsbeispiel eines Stufenkolbens des Rückschlagventils nach Figur 2 im Schnitt
Figur 4 ein zweites Ausführungsbeispiel eines Stufenkolbens für ein Rückschlagventil nach Figur 2 im Schnitt
Figur 5 ein erstes Ausführungsbeispiel der Verbindung von Teilen des Kolbens der Kolben-Zylinder-Einheit nach Figur 1
Figur 6 ein zweites Ausführungsbeispiel der Verbindung von Teilen des Kolbens der Kolben-Zylinder-Einheit nach Figur 1.
Figur 7 eine ein zweites Ausführungsbeispiel einer vergrößerten Darstellung eines Kolbens der Kolben-Zylinder-Einheit nach Figur 1 im Bereich eines Rückschlagventils im Querschnitt

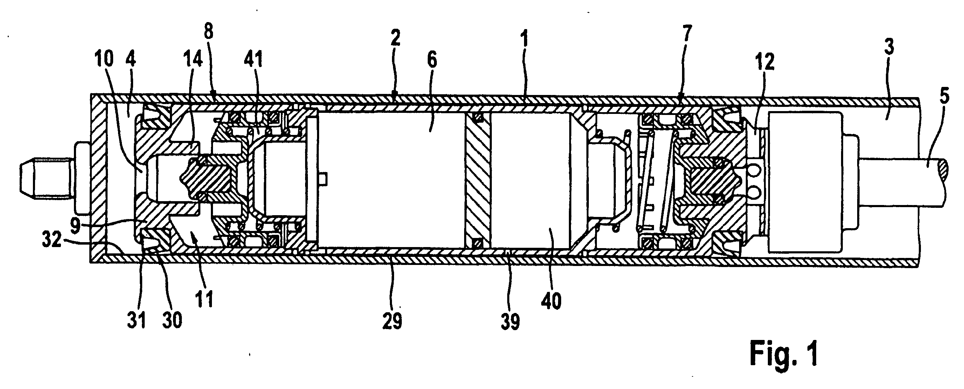

Die in Figur 1 darstellte Kolben-Zylinder-Einheit ist ein stufenlos wirkender Türfeststeller für Kraftfahrzeuge. Er besitzt einen an seinen Enden geschlossenen Zylinder 1, in dem ein Kolben 2 verschiebbar geführt ist, der den Innenraum des Zylinders 1 in einen kolbenstangenseitigen ersten Arbeitsraum 3 und einen kolbenstangenfernen zweiten Arbeitsraum 4 unterteilt. Beide Arbeitsräume 3 und 4 sind mit öl gefüllt.

Einseitig ist an dem Kolben 2 eine Kolbenstange 5 angeordnet, die sich durch den ersten Arbeitsraum 3 erstreckt und durch eine nicht dargestellte Dichtung sowie eine ebenfalls nicht dargestellte stirnseitige Verschlußwand des Zylinders 1 dicht nach außen geführt ist.

Der Kolben 2 besteht aus einem mittleren Volumenausgleichselement 6, einem zum ersten Arbeitsraum 3 hin sich anschließenden ersten Ventilelement 7 und einem zum zweiten Arbeitsraum 4 hin sich anschließenden zweiten Ventilelement 8. Das Volumenausgleichselement 6, das erste Ventilelement 7 und das zweite Ventilelement 8 sind fest miteinander verbunden, wobei an dem ersten Ventilelement 7 auch die Kolbenstange 5 befestigt ist. Die etwa topfartig ausgebildeten Ventilelemente 7 und 8 besitzen an ihren den jeweiligen Arbeitsräumen 3 und 4 zugewandten Enden einen Boden 9.

Die kleinste Stufe 10 einer koaxial im Ventilelement 7 und 8 ausgebildeten Stufenbohrung 11 erstreckt sich durch den Boden 9 und mündet in dem Arbeitsraum 3 bzw. 4. Dazu sind bei dem ersten Ventilelement 7 drei rechtwinklig die kleinste Stufe 10 schneidende Verbindungsbohrungen 12 im Ventilelement 7 ausgebildet. Bei dem Ventilelement 8 mündet die kleinste Stufe 10 der Stufenbohrung 11 direkt in den Arbeitsraum 4.

Da der Aufbau der Ventilelemente 7 und 8 ansonsten gleich ist, erfolgt die weitere Beschreibung anhand des zweiten Ventilelements 8.

An die kleinste Stufe 10 der Stufenbohrung 11 anschließend ist in dem Boden 9 eine zweite Stufe 13 der Stufenbohrung 11 ausgebildet, zu deren Verlängerung von dem Arbeitraum 4 weggerichtet an dem Boden 9 ein koaxial in die Topföffnung des Ventilelements 8 hervorstehendes Rohr 14 ausgebildet ist, das an seinem dem Arbeitsraum abgewandten Endbereich mit radial durchgehenden Schlitzen 15 ausgebildet ist. Die Topföffnung des Ventilelements 8 selbst bildet die größte Stufe 16 der Stufenbohrung 11.

In dieser größten Stufe 16 der Stufenbohrung 11 ist die größte Stufe 17 eines Stufenkolbens 18 verschiebbar angeordnet, deren kleinere Stufe 19 in der zweiten Stufe 13 der Stufenbohrung 11 verschiebbar ist. Das zur kleinsten Stufe 10 der Stufenbohrung 11 gerichtete Ende der kleineren Stufe 19 des Stufenkolbens 18 ist als Schließglied 20 eines Rückschlagventils 26 mit einer kegelartigen Schließfläche 21 ausgebildet, die auf einen Ventilsitz 22 aufsetzbar ist, der von der Mündung der kleinsten Stufe 10 in die zweite Stufe 13 der Stufenbohrung 11 gebildet ist. Das Schließglied 20 ist dabei ein separates Bauteil aus einem elastomeren Werkstoff, das an seiner der Schließfläche 21 abgewandten Seite einen koaxial hervorstehenden Schaft 23 besitzt, mit dem es in eine entsprechende Grundbohrung 24 im Stufenkolben 18 fest eingesetzt ist.

Durch einen den Schaft 23 an seinem aus der Grundbohrung 24 herausragenden Bereich umschließenden Dichtring 25, der mit seiner radial umlaufenden äußeren Ringfläche an der zylindrischen Innenwand der zweiten Stufe 13 der Stufenbohrung 13 in Anlage ist, ist die zweite Stufe 13 von der größten Stufe 17 der Stufenbohrung 11 absperrbar. Diese Absperrung besteht in dem ersten Teil eines Öffnungshubes des Rückschlagventils 26 bis der Dichtring 25 den Bereich der radialen Schlitze 15 erreicht hat und dann über diese die kleinste Stufe 10 und die zweite Stufe 13 der Stufenbohrung 11 und damit auch der zweite Arbeitsraum 4 mit der größten Stufe 16 der Stufenbohrung 11 verbunden wird.

Diese Öffnungsbewegung des Stufenkolbens 11 erfolgt entgegen der Kraft einer den Stufenkolben 11 in Schließrichtung beaufschlagenden vorgespannten Schraubendruckfeder 27, wenn sich ein entsprechender Druck in dem Arbeitsraum 4 aufgebaut hat, der zunächst die Schließfläche 21 des Schließgliedes 20 und nach dessen Abheben von dem Ventilsitz 22 die gesamte Stirnfläche der kleineren Stufe 19 des Stufenkolbens 18 beaufschlagt. Nach Überfahren der Schlitze 15 durch den Dichtring 25 wird dann auch noch die Fläche der größten Stufe 17 des Stufenkolbens 18 beaufschlagt.

Durch dieses sugsessive Zuschalten der Druckbeaufschlagung der Stufen des Stufenkolbens 18 wird auch bei einer Reduzierung des Drucks in dem Arbeitsraum 4 nach einem Abheben des Schließglieds 20 von dem Ventilsitz 22 das Rückschlagventil 26 offen gehalten.

Von dem Bodenbereich der größten Stufe 16 der Stufenbohrung 11 führt eine Drosselöffnung 28 in einen ringförmigen Zylinderraum 29, der zwischen der radial umlaufenden Mantelfläche des Kolbens 2 und der Innenwand des Zylinders 1 zwischen jeweils einer das erste und das zweite Ventilelement 7 und 8 umschließenden und gegenüber der Innenwand des Zylinders 1 abdichtenden Ringdichtung 30 gebildet ist. Diese Ringdichtungen 30 besitzen eine radial umlaufende Dichtlippe 31, die mit ihrem freien Ende etwa zu dem an ihr Ventilelement 7 und 8 angrenzenden Arbeitsraum 3 und 4 gerichtet ist und federnd an der Innenwand 32 des Zylinders 1 in Anlage ist.

Die größte Stufe 17 des Stufenkolbens 18 besitzt an ihrer radial umlaufenden Mantelfläche zwei im Abstand zueinander ausgebildete Ringnuten 33 und 34, in deren Dichtringe 35 und 36 zur Abdichtung des Stufenkolbens 18 gegenüber der Innenwand der größten Stufe 16 der Stufenbohrung 11 angeordnet sind. Zwischen den beiden mit den Dichtringen 35 und 36 versehenen Ringnuten 33 und 34 ist an der zylindrischen Mantelfläche der größten Stufe 17 des Stufenkolbens 18 eine weitere radial umlaufende Ringnut 37 ausgebildet, die in der Schließposition des Stufenkolbens 18 radial in Überdeckung mit einer in der größten Stufe 17 des Stufenkolbens 18 ausgebildeten, die Ringnut 37 mit dem Zylinderraum 29 verbindenden radialen Verbindung 38 ist.

In der Stellung des größten Öffnungshubes des Stufenkolbens 18 gelangt die größte Stufe 16 der Stufenbohrung 11 in Verbindung mit der radialen Verbindung 38, so daß das unter Druck stehende Öl aus dem Arbeitsraum 4 über die Stufen 10, 13 und 16 der Stufenbohrung 11 und die radiale Verbindung 38 in den Zylinderraum 29 strömen kann. Da die Dichtlippe 31 des Ventilelements 8 von dem Arbeitsraum 4 her druckbelastet ist, sperrt sie den Zylinderraum 29 zum Arbeitsraum 4 hin ab. Eine derartige Druckbelastung der Dichtlippe 31 des Ventilelements 7 ist aber nicht vorhanden, so daß das von dem Arbeitsraum 4 in den Zylinderraum 29 strömende Öl die Dichtlippe des Ventilelements 7 überströmt und in den Arbeitsraum 3 gelangt.

Damit ist der gesamte Kolben 2 in den Arbeitsraum 4 verschiebbar.

Da das aus dem Arbeitsraum 4 verdrängte Ölvolumen größer ist, als das durch die Verschiebung des Kolbens 2 gewonnene Volumen in dem die Kolbenstange 5 aufnehmenden Arbeitsraum 3, wird das überschüssige Ölvolumen über eine Einlaßöffnung 39 von dem Zylinderraum 29 in eine Volumenausgleichskammer 40 des Volumenausgleichselements 6 verdrängt.

Bei Beendigung der Kraftbeaufschlagung der Kolbenstange 5 und damit der Bewegung des Kolbens 2 wird das Öl in dem Arbeitsraum 4 drucklos, so daß die Schraubendruckfeder 27 den Stufenkolben 18 wieder in seine Schließstellung verschiebt und das Rückschlagventil 26 geschlossen wird.

In der größten Stufe 16 der Stufenbohrung 11 ist auf der dem Arbeitsraum 4 abgewandten Seite der größten Stufe 17 des Stufenkolbens 18 eine Dämpfungskammer 41 gebildet, die über eine Dämpfungsöffnung 42 mit dem Zylinderraum 29 verbunden ist, wodurch eine Öffnungsbewegung des Stufenkolbens 18 gedämpft wird.
Um eine Dämpfung der Schließbewegung zu vermeiden, ist der Dichtring 36 in Richtung von dem Zylinderraum 29 zur Dämpfungskammer 41 unterströmbar und so die Dämpfungskammer 41 schnell mit Öl füllbar. In umgekehrte Richtung dichtet der Dichtring 26 aber ab, so daß bei einer Öffnungsbewegung nur die Dämpfungsöffnung 42 als Verbindung der Dämpfungskammer 41 mit dem Zylinderraum 29 zur Verfügung steht.

In dem letzten Teil des Schließhubes, wenn die Verbindung von der radialen Verbindung 38 zur größten Stufe 16 der Stufenbohrung 11 bereits wieder unterbrochen ist, kann das restliche Öl aus der Stufe 16 über die Drosselöffnung 28 in den Zylinderraum 29 und von dort die nun druckentlastete Dichtlippe 31 überströmend in den Arbeitsraum 4 gelangen.
Der Aufbau und die Funktion des Ventilelements 7 entspricht dem Aufbau und der Funktion des beschriebenen Ventilelementes 8.

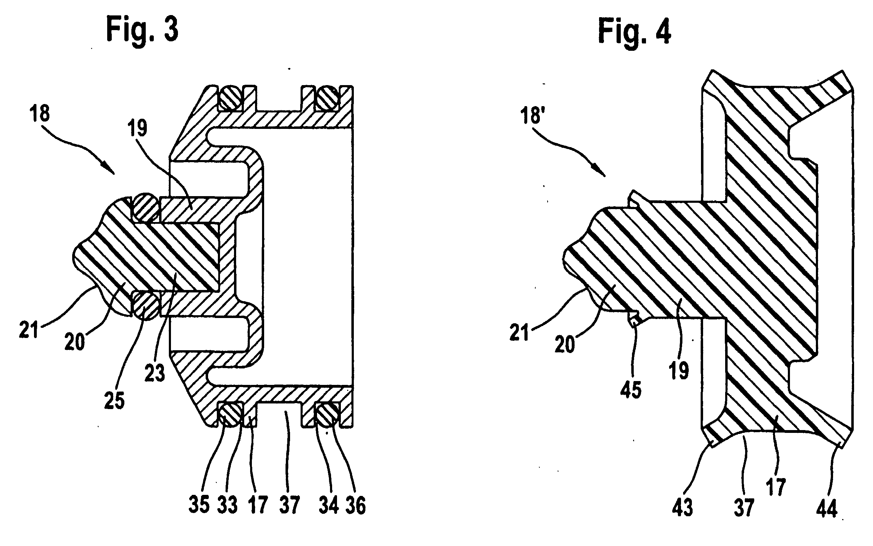

Der in Figur 4 dargestellte Stufenkolben 18' entspricht in seinem Aufbau und seiner Funktion dem in den Figuren 1 bis 3 dargestellten Stufenkolben 18 mit dem Unterschied, daß er als ein Bauteil aus einem Elastomer besteht und einteilig mit die Dichtringe 35 und 36 bildenden Dichtlippen 43 und 44, mit einer den Dichtring 25 bildenden Dichtlippe 45 und mit dem die Schließfläche 21 aufweisenden Schließglied 20 ausgebildet ist.

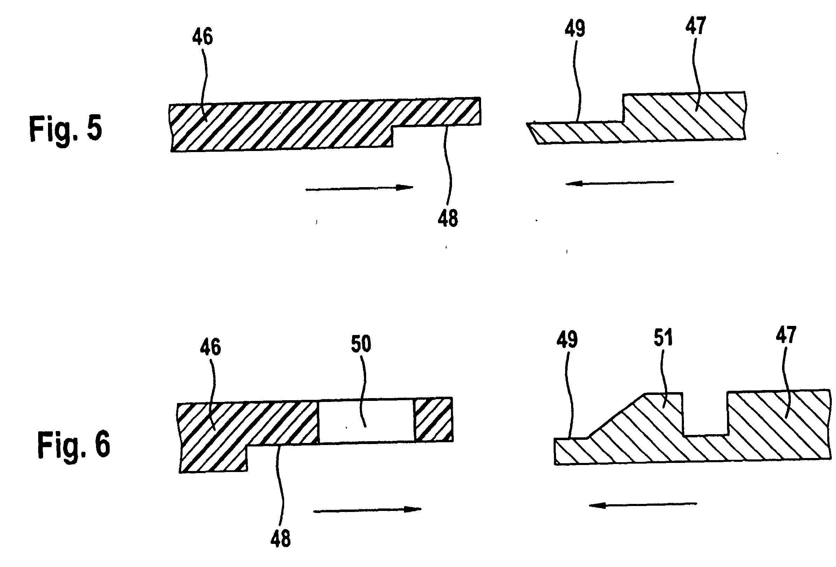

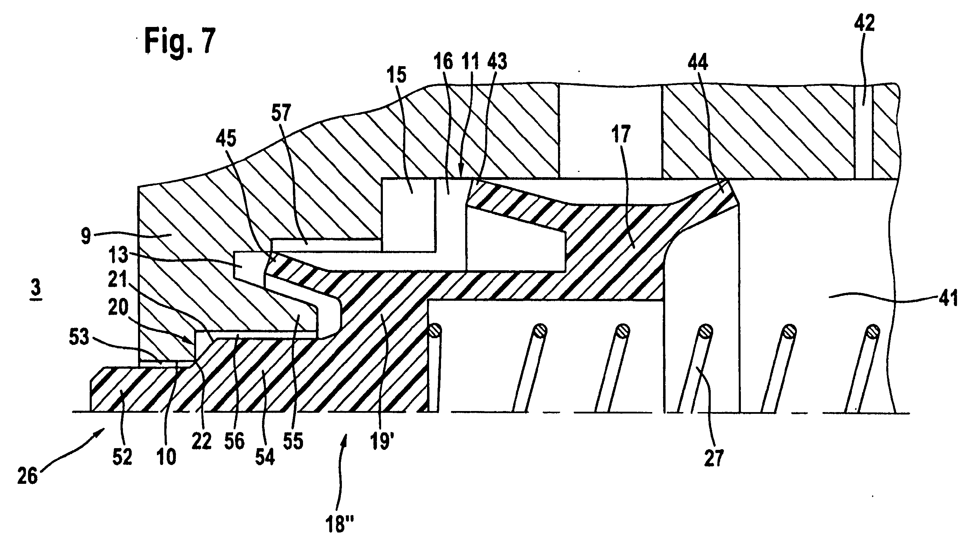

In den Figuren 5 und 6 sind Verbindungen des Ventilelements 8 mit dem Volumenausgleichselement 6 dargestellt. Dabei weist das Ventilelement 8 ein koaxiales ringförmiges Ende 46 und das Volumenausgleichselement 6 ein koaxiales ringförmiges Ende 47 auf. Beide ringförmigen Enden 46 und 47 besitzen den gleichen Außendurchmesser. Das ringförmige Ende 46 besitzt an seinem Innenumfang eine durchmesservergrößernde Ringstufe 48 und das ringförmige Ende 47 an seinem Außendurchmesser eine entsprechende durchmesserverringernde Ringstufe 49. Diese Ringstufen 48 und 49 werden teleskopartig ineinander geschoben und miteinander verbunden.

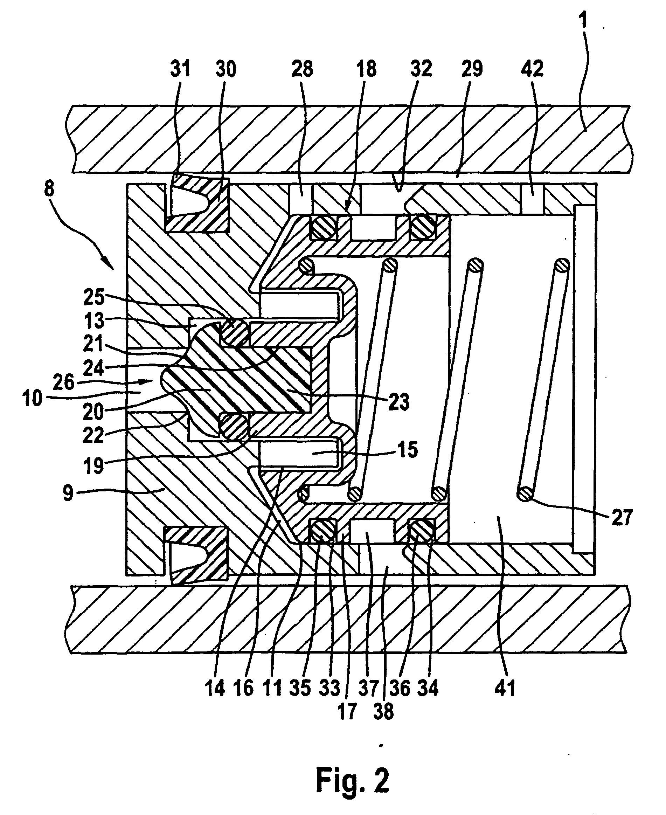

Bei dem Ausführungsbeispiel der Figur 5 erfolgt dies durch eine materialschlüssige Verbindung wie z.B. eine Laserverschweißung. Bei dem Ausführungsbeispiel der Figur 6 ist im Bereich der Ringstufe 48 eine radiale Rastöffnung 50 ausgebildet, in die eine entsprechende radial nach außen hervorstehende Rastnase 51 an der Ringstufe 49 bei dem teleskopischen Ineinanderschieben der Ringstufen 48 und 49 einrastbar ist.
Der grundsätzliche Aufbau des Ausführungsbeispiels der Figur 7 entspricht dem in Figur 2 dargestellten Ausführungsbeispiel wobei der Stufenkolben 18" analog dem in Figur 4 dargestellten Stufenkolben 18' als ein aus einem Elastomer bestehenden Bauteil ausgebildet ist.

Der Stufenkolben 18" weist dabei einen von dem Schließglied 20 zum Arbeitsraum 3 gerichteten zylindrischen Fortsatz 52 auf, der durch die kleinste Stufe 10 der Stufenbohrung 11 ragt. Der zwischen der umlaufenden Mantelfläche des Fortsatzes 52 und der Innenwand der kleinsten Stufe 10 der Stufenbohrung 11 gebildete Ringspalt 53 wirkt als Drosseldurchgang.

An dem dem freien Ende des Stufenkolbens 18" entgegengesetzten Ende des Fortsatzes 52 schließt sich konisch erweiternd eine Schließfläche 21 an, die dann in einen weiteren zylindrischen Fortsatz 54 des Stufenkolbens 18" übergeht. Dieser weitere Fortsatz 54 ist durch einen koaxialen ringförmigen Kragen 55 hindurchgeführt, der in Öffnungsrichtung des Rückschlagventils 26 frei in die zweite Stufe 13 der Stufenbohrung 11 ragt. Der Ringspalt 56 zwischen der umlaufenden Mantelfläche des Fortsatzes 54 und der Innenwand des ringförmigen Kragens 55 bildet einen weiteren Drosseldurchgang.

Da die Länge der kleinsten Stufe 10 der Stufenbohrung 11 kleiner ist als die Länge des Fortsatzes 52 bleibt im ersten Teil eines Öffnungshubes des Stufenkolbens 18" die Drossellänge konstant. Erst im weiteren Verlauf reduziert sich die Überdeckung von kleinster Stufe 10 und Fortsatz 52 und damit die Drossellänge.

Gleichzeitig reduziert sich die in Schließstellung des Stufenkolbens 18" größte Länge des Ringspalts 56 zwischen dem Fortsatz 54 und dem Kragen 55, so daß sich auch deren Drossellänge.

Da aber die Länge des Fortsatzes 54 größer ist als die Länge des Fortsatzes 52 wird eine völlige Öffnung des Durchgangs von dem Arbeitsraum 4 zur zweiten Stufe der Stufenbohrung 11 erst erreicht, wenn sich der Fortsatz 54 außerhalb des Kragens 55 befindet.

In der Wand der zweiten Stufe 13 der Stufenbohrung 11 ist eine axiale Steuernut 57 ausgebildet, durch die bereits vor einer Öffnung der zweiten Stufe 13 zur größten Stufe 16 der Stufenbohrung eine limitierte Verbindung hergestellt wird.

### Bezugszeichenliste

- 1: Zylinder
- 2: Kolben
- 3: erster Arbeitsraum
- 4: zweiter Arbeitsraum
- 5: Kolbenstange
- 6: Volumenausgleichselement
- 7: erstes Ventilelement
- 8: zweites Ventilelement
- 9: Boden
- 10: kleinste Stufe
- 11: Stufenbohrung
- 12: Verbindungsbohrungen
- 13: zweite Stufe

- 14: Rohr
- 15: Schlitze
- 16: größte Stufe
- 17: größte Stufe
- 18: Stufenkolben
- 18': Stufenkolben
- 18': Stufenkolben

- 19: kleinere Stufe
- 19': Kleinere Stufe
- 20: Schließglied
- 21: Schließfläche
- 22: Ventilsitz

- 23: Schaft
- 24: Grundbohrung
- 25: Dichtring
- 26: Rückschlagventil
- 27: Schraubendruckfeder

- 28: Drosselöffnung
- 29: Zylinderraum
- 30: Ringdichtung
- 31: Dichtlippe
- 32: Innenwand
- 33: Ringnut
- 34: Ringnut
- 35: Dichtring
- 36: Dichtring
- 37: Ringnut
- 38: radiale Verbindung
- 39: Einlaßöffnung
- 40: Volumenausgleichskammer
- 41: Dämpfungskammer
- 42: Dämpfungsöffnung
- 43: Dichtlippe
- 44: Dichtlippe
- 45: Dichtlippe
- 46: ringförmiges Ende
- 47: ringförmiges Ende

- 48: Ringstufe
- 49: Ringstufe
- 50: Rastöffnung
- 51: Rastnase
- 52: zylindrischer Fortsatzz
- 53: Ringspalt
- 54: zylindrischer Fortsatz
- 55: ringförmiger Kragen

- 56: Ringspalt
- 57: Steuernut

## Patentansprüche

1. Kolben-Zylinder-Einheit mit einem geschlossenen Zylinder (1), in dem ein Kolben (2) über eine radial umschließende Ringdichtung (30) gegenüber dem Zylinder (1) abgedichtet axial verschiebbar geführt ist und den Zylinderinnenraum (29) in einen ersten und eine zweiten Arbeitsraum (3, 4) unterteilt, die beide mit einem Fluid, insbesondere mit einer hydraulischen Flüssigkeit gefüllt sind, mit einer Kolbenstange (5), die sich durch den Zylinderinnenraum (29) erstreckt und stirnseitig dicht durch zumindest eine Verschlußwand des Zylinders (1) nach außen hindurchgeführt ist, mit einem ersten Rückschlagventil (26), dessen Schließglied in Schließrichtung kraftbelastet und unter einem hohen Druck in dem ersten Arbeitsraum (3) den ersten Arbeitsraum (3) mit dem zweiten Arbeitsraum (4) verbindend öffenbar ist, mit einem zweiten Rückschlagventil (26), dessen Schließglied in Schließrichtung kraftbelastet und unter einem hohem Druck im zweiten Arbeitsraum (4) den zweiten Arbeitsraum (4) mit dem ersten Arbeitsraum (3) verbindend offenbar ist, wobei die von dem Druck des Arbeitsraums (3, 4) wirksam beaufschlagbare Fläche des Schließglieds des ersten und/oder zweiten Rückschlagventils (26) während dessen Öffnungshubes vergrößerbar ist und wobei das Schließglied ein Stufenkolben (18, 18') ist, der in einer entsprechenden Stufenbohrung (11) verschiebbar angeordnet ist und dessen Stufen (17, 19) stirnseitige wirksam vom Druck des Arbeitsraums (3, 4) beaufschlagbare Flächen aufweisen, wobei beginnend in der Schließstellung und der Druckbeaufschlagung der kleinsten Stufe (19) mit zunehmendem Öffnungshub des Stufenkolbens (18, 18') zunehmend weitere Stufen (17) des Stufenkolbens (18, 18') druckbeaufschlagbar sind, **dadurch gekennzeichnet, daß** eine oder mehrere Stufen (13) der Stufenbohrung (11) eine Verbindung zur nächstgrößeren Stufe (16) besitzt, wobei nach Erreichen jeweils eines endlichen, vorbestimmten Öffnungshubes die entsprechende Verbindung zur nächsthöheren Stufe (16) der Stufenbohrung (11) öffenbar ist.

2. Kolben-Zylinder-Einheit nach Anspruch 1, **dadurch gekennzeichnet, daß** zumindest die kleinste vom Druck des Arbeitsraumes (3, 4) beaufschlagbare Fläche des Rückschlagventils (26) ein Schließglied (20) eines Sitzventils ist.

3. Kolben-Zylinder-Einheit nach Anspruch 2, **dadurch gekennzeichnet, daß** die Stirnseite der kleinsten Stufe (19) des Stufenkolbens (18, 18') das Schließglied (20) bildet, das auf die einen Ventilsitz (22) des Rückschlagventils (26) bildende Mündung der zum Arbeitsraum (3, 4) führenden kleinsten Stufe (10) der Stufenbohrung (11) aufsetzbar ist.

4. Kolben-Zylinder-Einheit nach einem der Ansprüche 2 und 3, **dadurch gekennzeichnet, daß** das Schließglied (20) eine kegelartige Schließfläche (21) besitzt, die auf den Ventilsitz (22) aufsetzbar ist.

5. Kolben-Zylinder-Einheit nach einem der Ansprüche 2 bis 4, **dadurch gekennzeichnet, daß** das Schließglied (20) eine Schließfläche (21) aus einem Elastomer besitzt.

6. Kolben-Zylinder-Einheit nach Anspruch 5, **dadurch gekennzeichnet, daß** eine oder mehrere der Stufen (17, 19) des Stufenkolbens (18, 18') einen Schieber eines Schieberventils bilden, durch den die entsprechende radial in die Stufenbohrung (11) mündende Verbindung verschließbar ist,

7. Kolben-Zylinder-Einheit nach Anspruch 6, **dadurch gekennzeichnet, daß** eine oder mehrere der Stufen (17, 19) des Stufenkolbens (18) an ihrer zylindrischen Mantelfläche eine radial umlaufende Ringnut (33, 34) aufweist, in der ein Dichtring (25, 35, 36) eingesetzt ist, der mit seinem radial umlaufenden äußeren Bereich dichtend an der Innenwand der entsprechenden Stufe (13, 16) der Stufenbohrung (11) in Anlage ist.

8. Kolben-Zylinder-Einheit nach einem der Ansprüche 5 bis 7, **dadurch gekennzeichnet, daß** von der größten Stufe (16) der Stufenbohrung (11) eine radiale Verbindung (38) in einen ringförmigen Zylinderraum (29) mündet, der zwischen der Innenwand (32) des Zylinders (1) und der radial umlaufenden Mantelfläche des Kolbens (2) gebildet ist und durch die Ringdichtungen (30) gegenüber den Arbeitsräumen (3, 4) abgedichtet ist, durch dessen Druck der Stufenkolben (18, 18') in Öffnungsrichtung beaufschlagbar ist, wobei die radiale Verbindung (38) von der größten Stufe (17) des Stufenkolbens (18, 18') verschließbar und in dessen größter Öffnungshubstellung öffenbar ist.

9. Kolben-Zylinder-Einheit nach einem der vorhergehenden Ansprüche, **dadurch gekennzeichnet, daß** das Schließglied durch eine am Kolben (2) abgestützte Druckfeder, insbesondere eine Schraubendruckfeder (27) oder eine Tellerfeder in Schließrichtung belastet ist.

10. Kolben-Zylinder-Einheit nach einem der vorhergehenden Ansprüche, **dadurch gekennzeichnet, daß** die größte, Stufe (16) der Stufenbohrung (11) auf der der Arbeitskammer (3, 4) abgewandten Seite des Stufenkolbens (18, 18') eine Dämpfungskammer (41) bildet, die über eine Dämpfungsöffnung (42) mit dem Zylinderraum (29) verbunden ist.

11. Kolben-Zylinder-Einheit nach Anspruch 10, **dadurch gekennzeichnet, daß** die Dämpfungskammer (41) bei Bewegung des Stufenkolbens (18, 18') in Schließrichtung über ein Ventil mit dem Zylinderraum (29) verbindbar ist.

12. Kolben-Zylinder-Einheit nach Anspruch 11, **dadurch gekennzeichnet, daß** das Ventil einen Dichtring (36) aufweist, der in einer Ringnut (34) angeordnet ist, die an der zylindrischen Mantelfläche der größten Stufe (17) des Stufenkolbens (11) ausgebildet ist, wobei die der Dämpfungskammer (41) abgewandte Seite des Dichtrings (36) mit dem Zylinderraum (29) verbindbar und der Dichtring (36) von dem Zylinderraum (29) zur Dämpfungskammer (41) über- oder unterströmbar ist.

13. Kolben-Zylinder-Einheit nach den Ansprüchen 9 bis 12, **dadurch gekennzeichnet, daß** die Druckfeder in der Dämpfungskammer (41) angeordnet ist.

14. Kolben-Zylinder-Einheit nach einem der vorhergehenden Ansprüche, **dadurch gekennzeichnet, daß** die größte Stufe (16) der Stufenbohrung (11) auf der der Arbeitskammer (3, 4) zugewandten Seite der entsprechenden Stufe (17) des Stufenkolbens (18, 18') über eine Drosselöffnung (28) mit dem Zylinderraum (29) verbunden ist.

15. Kolben-Zylinder-Einheit nach einem der vorhergehenden Ansprüche, **dadurch gekennzeichnet, daß** die Ringdichtung (30) in einer Ringnut angeordnet ist, die an der zylindrischen Mantelfläche des Kolbens (2) ausgebildet ist.

16. Kolben-Zylinder-Einheit nach einem der vorhergehenden Ansprüche, **dadurch gekennzeichnet, daß** die Ringdichtung (30) eine radial umlaufende Dichtlippe (31) aufweist, die mit ihrem freien Ende etwa zum Arbeitsraum (3, 4) gerichtet federnd an der Innenwand (32) des Zylinders (1) in Anlage ist.

17. Kolben-Zylinder-Einheit nach einem der vorhergehenden Ansprüche, **dadurch gekennzeichnet, daß** zumindest eine Stufenbohrung (13) durch die Durchgangsbohrung eines zur Dämpfungskammer (41) gerichteten Rohres (14) gebildet ist, in der eine kleinere Stufe (19) des Stufenkolbens (18, 18') verschiebbar angeordnet ist, wobei das Rohr (14) von einem kragenartigen Bereich des Stufenkolbens (18) umgriffen ist, an dem radial das Rohr (14) umschließend die nächstgrößere Stufe (17) des Stufenkolbens (18) angeordnet ist.

18. Kolben-Zylinder-Einheit nach Anspruch 17, **dadurch gekennzeichnet, daß** das Rohr (14) an seinem der Dämpfungskammer (41) zugewandten Endbereich mit radial durchgehenden Schlitzen (15) ausgebildet ist, die die radiale Verbindung zwischen zwei Stufen (13, 16) der Stufenbohrung (11) bilden.

19. Kolben-Zylinder-Einheit nach einem der vorhergehenden Ansprüche, **dadurch gekennzeichnet, daß** der Stufenkolben (18') aus einem elastomeren Werkstoff besteht und einteilig mit der Schließfläche (21) des Schließglieds (20) und/oder mit radial umlaufenden Dichtlippen (43, 44, 45) an einer oder mehreren Stufen (17, 19) des Stufenkolbens ausgebildet ist.

20. Kolben-Zylinder-Einheit nach einem der vorhergehenden Ansprüche, **dadurch gekennzeichnet, daß** der Kolben (2) mit einer einseitigen Kolbenstange (5) versehen ist und eine Volumenausgleichskammer (40) zur Aufnahme der gegenüber der Verdrängungsmenge des kolbenstangenseitigen Arbeitsraumes (3) größeren Verdrängungsmenge des kolbenstangenfernen Arbeitsraums (4) aufweist.

21. Kolben-Zylinder-Einheit nach Anspruch 20, **dadurch gekennzeichnet, daß** die Volumenausgleichskammer (40) zwischen dem ersten und dem zweiten Rückschlagventil im Kolben (2) angeordnet und über eine Einlaßöffnung (39) mit dem Zylinderraum (29) zwischen dem ersten und dem zweiten Rückschlagventil verbunden ist.

22. Kolben-Zylinder-Einheit nach einem der vorhergehenden Ansprüche, **dadurch gekennzeichnet, daß** in einem ersten Teil des Öffnungshubes des Schließgliedes des Rückschlagventils (26) der Ventildurchgang ein Drosseldurchgang ist.

23. Kolben-Zylinder-Einheit nach einem der Ansprüche 2 bis 22, **dadurch gekennzeichnet, daß** der Drosseldurchgang in Strömungsrichtung von dem ersten Arbeitsraum (3) zum zweiten Arbeitsraum (4) und/oder von dem zweiten Arbeitsraum (4) zum ersten Arbeitsraum (3) vor und/oder hinter dem Ventilsitz (22) des Sitzventils angeordnet ist.

24. Kolben-Zylinder-Einheit nach den Ansprüchen 3 und 23, **dadurch gekennzeichnet, daß** der Stufenkolben (18") einen von dem Schließglied (20) zum Arbeitsraum (3, 4) gerichteten etwa zylindrischen Fortsatz (52) aufweist, der durch die kleinste Stufe (10) der Stufenbohrung (11) ragt, wobei ein Ringspalt (53) zwischen der umlaufenden Mantelfläche des Fortsatzes (52) und der Innenwand der kleinsten Stufe (10) der Stufenbohrung (11) den Drosseldurchgang bildet.

25. Kolben-Zylinder-Einheit nach Anspruch 23, **dadurch gekennzeichnet, daß** die in Strömungsrichtung von dem ersten Arbeitsraum (3) zum zweiten Arbeitsraum.(4) und/oder von dem zweiten Arbeitsraum (4) zum ersten Arbeitsraum (3) hinter dem Ventilsitz (22) des Sitzventils befindliche stufe (19') des Stufenkolbens (18") einen etwa zylindrisch ausgebildeten Fortsatz aufweist, der in Öffnungsrichtung des Rückschlagventils (26) durch einen in die zweite Stufe (13) der Stufenbohrung (11) ragenden koaxialen ringförmigen Kragen (55) geführt ist, wobei ein Ringspalt (56) zwischen der umlaufenden Mantelfläche des Fortsatzes (54) und der Innenwand des ringförmigen Kragens (55) den Drosseldurchgang bildet.

## Claims

1. Piston/cylinder unit having a closed cylinder (1), in which a piston (2) is guided in an axially displaceable manner sealed with respect to the cylinder (1) via an annular seal (30) surrounding it radially, and divides the cylinder interior (29) into a first and a second working space (3, 4), which are both filled with a fluid, in particular with a hydraulic fluid, having a piston rod (5) which extends through the cylinder interior (29) and is guided on its end side to the outside in a sealed manner through at least one closing wall of the cylinder (1), having a first nonreturn valve (26), the closing element of which is force-loaded in the closing direction and, under a high pressure in the first working space, can be opened connecting the first working space (3) to the second working space (4), and having a second nonreturn valve (26), the closing element of which is force-loaded in the closing direction and, under a high pressure in the second working space (4), can be opened connecting the second working space (4) to the first working space (3), wherein that surface of the closing element of the first and/or second nonreturn valve (26) which can be acted upon effectively by the pressure of the working space (3, 4) can be enlarged during the opening stroke of said nonreturn valve and wherein the closing element is a stepped piston (18, 18') which is arranged displaceably in a corresponding stepped hole (11) and the steps (17, 19) of which have end-side surfaces which can be acted upon effectively by the pressure of the working space (3, 4), where, starting in the closed position and the pressurization of the smallest step (19), as the opening stroke of the stepped piston (18, 18') increases, further steps (17) of the stepped piston (18, 18') can increasingly be pressurized **characterized in that** one or more steps (13) of the stepped hole (11) have a connection to the next-larger step (16), it being possible for the corresponding connection to the next-higher step (16) of the stepped hole (11) to be opened when a final, predetermined opening stroke is reached in each case.

2. Piston/cylinder unit according to Claim 1, **characterized in that** at least the smallest surface of the nonreturn valve (26) that can be acted upon by the pressure of the working space (3, 4) is a closing element (20) of a seat valve.

3. Piston/cylinder unit according to Claim 2, **characterized in that** the end side of the smallest step (19) of the stepped piston (18, 18') forms the closing element (20) which can be placed onto the mouth of the smallest step (10) of the stepped hole (11), the mouth forming a valve seat (22) of the nonreturn valve (26) and the smallest step leading to the working space (3, 4).

4. Piston/cylinder unit according to either of Claims 2 and 3, **characterized in that** the closing element (20) has a conical closing surface (21) which can be placed onto the valve seat (22).

5. Piston/cylinder unit according to one of Claims 2 to 4, **characterized in that** the closing element (20) has a closing surface (21) made of an elastomer.

6. Piston/cylinder unit according to Claim 5, **characterized in that** one or more of the steps (17, 19) of the stepped piston (18, 18') form a slide of a slide valve, by means of which the corresponding connection leading radially into the stepped hole (11) can be closed.

7. Piston/cylinder unit according to Claim 6, **characterized in that** one or more of the steps (17, 19) of the stepped piston (18) have, on their cylindrical circumferential surface, a radially encircling annular groove (33, 34) in which a sealing ring (25, 35, 36) is inserted, the sealing ring bearing with its radially encircling, outer region in a sealing manner against the inner wall of the corresponding step (13, 16) of the stepped hole (11).

8. Piston/cylinder unit according to one of Claims 5 to 7, **characterized in that** a radial connection (38) leads from the largest step (16) of the stepped hole (11) into an annular cylinder space (29) which is formed between the inner wall (32) of the cylinder (1) and the radially encircling circumferential surface of the piston (2) and is sealed by the annular seals (30) with respect to the working spaces (3, 4), the pressure of which can be used to act upon the stepped piston (18, 18') in the opening direction, it being possible for the radial connection (38) to be closed by the largest step (17) of the stepped piston (18, 18') and for it to be opened in the largest opening-stroke position of said stepped piston.

9. Piston/cylinder unit according to one of the preceding claims, **characterized in that** the closing element is loaded in the closing direction by a compression spring, in particular a helical compression spring (27) or a disc spring, which is supported on the piston (2).

10. Piston/cylinder unit according to one of the preceding claims, **characterized in that** the largest step (16) of the stepped hole (11) forms, on that side of the stepped piston (18, 18') which faces away from the working chamber (3, 4), a damping chamber (41) which is connected to the cylinder space (29) via a damping opening (42).

11. Piston/cylinder unit according to Claim 10, **characterized in that**, when the stepped piston (18, 18') is moved in the closing direction, the damping chamber (41) can be connected to the cylinder space (29) via a valve.

12. Piston/cylinder unit according to Claim 11, **characterized in that** the valve has a sealing ring (36) which is arranged in an annular groove (34) which is formed on the cylindrical circumferential surface of the largest step (17) of the stepped piston (11), it being possible for that side of the sealing ring (36) which faces away from the damping chamber (41) to be connected to the cylinder space (29) and for the flow to pass over or under the sealing ring (36) from the cylinder space (29) to the damping chamber (41).

13. Piston/cylinder unit according to Claims 9 to 12, **characterized in that** the compression spring is arranged in the damping chamber (41).

14. Piston/cylinder unit according to one of the preceding claims, **characterized in that** the largest step (16) of the stepped hole (11) is connected, on that side of the corresponding step (17) of the stepped piston (18, 18') which faces the working chamber (3, 4), to the cylinder space (29) via a constricting opening (28).

15. Piston/cylinder unit according to one of the preceding claims, **characterized in that** the annular seal (30) is arranged in an annular groove which is formed on the cylindrical circumferential surface of the piston (2).

16. Piston/cylinder unit according to one of the preceding claims, **characterized in that** the annular seal (30) has a radially encircling sealing lip (31) which, with its free end directed approximately towards the working space (3, 4), bears resiliently against the inner wall (32) of the cylinder (1).

17. Piston/cylinder unit according to one of the preceding claims, **characterized in that** at least one stepped hole (13) is formed by the passage hole of a pipe (14), which is directed towards the damping chamber (41), in which passage hole a relatively small step (19) of the stepped piston (18, 18') is arranged displaceably, the pipe (14) being engaged around by a collar-like region of the stepped piston (18) on which the pipe (14) is arranged radially enclosing the next-larger step (17) of the stepped piston (18).

18. Piston/cylinder unit according to Claim 17, **characterized in that** the pipe (14) is designed, on its end region which faces the damping chamber (41), with radially continuous slots (15) which form the radial connection between two steps (13, 16) of the stepped hole (11).

19. Piston/cylinder unit according to one of the preceding claims, **characterized in that** the stepped piston (18') consists of an elastomeric material and is formed integrally with the closing surface (21) of the closing element (20) and/or with radially encircling sealing lips (43, 44, 45) on one or more steps (17, 19) of the stepped piston.

20. Piston/cylinder unit according to one of the preceding claims, **characterized in that** the piston (2) is provided with a one-sided piston rod (5) and has a volume control chamber (40) for receiving the amount displaced from the working space (4) remote from the piston rod, which amount is larger than the amount displaced from the working space (3) on the piston-rod side.

21. Piston/cylinder unit according to Claim 20, **characterized in that** the volume control chamber (40) is arranged between the first and the second nonreturn valve in the piston (2) and is connected to the cylinder space (29) between the first and the second nonreturn valve via an inlet opening (39).

22. Piston/cylinder unit according to one of the preceding claims, **characterized in that** the valve passage in a first part of the opening stroke of the closing element of the nonreturn valve (26) is a constricting passage.

23. Piston/cylinder unit according to one of Claims 2 to 22, **characterized in that** the constricting passage is arranged upstream and/or downstream of the valve seat (22) of the seat valve in the direction of flow from the first working space (3) to the second working space (4) and/or from the second working space (4) to the first working space (3).

24. Piston/cylinder unit according to Claims 3 and 23, **characterized in that** the stepped piston (18'') has an approximately cylindrical extension (52) which is directed from the closing element (20) to the working space (3, 4) and protrudes through the smallest step (10) of the stepped hole (11), an annular gap (53) between the encircling circumferential surface of the extension (52) and the inner wall of the smallest step (10) of the stepped hole (11) forming the constricting passage.

25. Piston/cylinder unit according to Claim 23, **characterized in that that** step (19') of the stepped piston (18'') which is situated downstream of the valve seat (22) of the seat valve in the direction of flow from the first working space (3) to the second working space (4) and/or from the second working space (4) to the first working space (3) has an extension which is of approximately cylindrical design and, in the opening direction of the nonreturn valve (26), is guided by a coaxial, annular collar (55) protruding into the second step (13) of the stepped hole (11), an annular gap (56) between the encircling circumferential surface of the extension (54) and the inner wall of the annular collar (55) forming the constricting passage.

## Revendications

1. Ensemble piston-cylindre, avec un cylindre fermé (1), dans lequel un piston (2) est guidé en coulissement axial, en étant étanché par rapport au cylindre (1) par un joint d'étanchéité annulaire (30) radialement entourant, et divise l'espace intérieur (29) du cylindre en une première (3) et une deuxième (4) chambres de travail qui sont toutes deux remplies d'un fluide, notamment d'un liquide hydraulique, avec une tige de piston (5), qui s'étend dans l'espace intérieur (29) du cylindre et est, sur son côté frontal, dirigée vers l'extérieur en traversant en étanchéité au moins une paroi de fermeture du cylindre (1), avec une première soupape de non-retour (26), dont l'obturateur est sollicité en force dans la direction de fermeture et peut, en présence d'une pression importante dans la première chambre de travail (3), être ouvert pour relier la première chambre de travail (3) à la deuxième chambre de travail (4), avec une deuxième soupape de non-retour (26), dont l'obturateur est sollicité en force dans la direction de fermeture et peut, en présence d'une pression importante dans la deuxième chambre de travail (4), être ouvert pour relier la deuxième chambre de travail (4) à la première chambre de travail (3), sachant que la surface de l'obturateur de la première et/ou de la deuxième soupape de non-retour (26) qui peut être sollicitée activement par la pression de la chambre de travail (3, 4) peut être augmentée pendant sa course d'ouverture, et sachant que l'obturateur est un piston à gradins (18, 18'), qui est disposé à coulissement dans un perçage à gradins correspondant (11) et dont les gradins (17, 19) présentent des surfaces frontales pouvant être sollicitées activement par la pression de la chambre de travail (3, 4), sachant qu'en commençant dans la position de fermeture par la sollicitation en pression du plus petit gradin (19), d'autres gradins (17) du piston à gradins (18, 18') peuvent être progressivement sollicités en pression tandis que la course d'ouverture du piston à gradins (18, 18') progresse, **caractérisé en ce qu'**un ou plusieurs gradins (13) du perçage à gradins (11) possèdent une liaison vers le gradin immédiatement supérieur (16), sachant que la liaison correspondante vers le gradin immédiatement supérieur (16) du perçage à gradins (11) peut être ouverte à l'atteinte d'une course d'ouverture finale respective prédéfinie.

2. Ensemble piston-cylindre selon la revendication 1, **caractérisé en ce qu'**au moins la plus petite surface de la soupape de non-retour (26) qui peut être sollicitée par la pression de la chambre de travail (3, 4) est un obturateur (20) d'une soupape à siège.

3. Ensemble piston-cylindre selon la revendication 2, **caractérisé en ce que** le côté frontal du plus petit gradin (19) du piston à gradins (18, 18') constitue l'obturateur (20), qui peut être posé sur l'embouchure constituant un siège de soupape (22) de la soupape de non-retour (26) du plus petit gradin (10) menant à la chambre de travail (3, 4) du perçage à gradins (11).

4. Ensemble piston-cylindre selon la revendication 2 ou 3, **caractérisé en ce que** l'obturateur (20) possède une surface d'obturation conique (21), qui peut être posée sur le siège de soupape (22).

5. Ensemble piston-cylindre selon l'une quelconque des revendications 2 à 4, **caractérisé en ce que** l'obturateur (20) possède une surface d'obturation (21) en élastomère.

6. Ensemble piston-cylindre selon la revendication 5, **caractérisé en ce qu'**un ou plusieurs des gradins (17, 19) du piston à gradins (18, 18') forment un tiroir d'une soupape à tiroir qui permet de fermer la liaison correspondante débouchant radialement dans le perçage à gradins (11).

7. Ensemble piston-cylindre selon la revendication 6, **caractérisé en ce qu'**un ou plusieurs des gradins (17, 19) du piston à gradins (18) présentent sur leur surface périphérique cylindrique une rainure annulaire (33, 34) radialement entourante dans laquelle est insérée une bague d'étanchéité (25, 35, 36) qui, par sa région extérieure radialement entourante, est en application étanche contre la paroi intérieure du gradin correspondant (13, 16) du perçage à gradins (11).

8. Ensemble piston-cylindre selon l'une quelconque des revendications 5 à 7, **caractérisé en ce qu'**une liaison radiale (38) débouche depuis le plus grand gradin (16) du perçage à gradins (11) dans une chambre de cylindre annulaire (29), qui est formée entre la paroi intérieure (32) du cylindre (1) et la surface périphérique radialement entourante du piston (2) et qui est étanchée vis-à-vis des chambres de travail (3, 4) par les joints d'étanchéité annulaires (30), chambre par la pression de laquelle le piston à gradins (18, 18') peut être sollicité dans la direction d'ouverture, sachant que la liaison radiale (38) peut être fermée par le plus grand gradin (17) du piston à gradins (18, 18') et peut être ouverte dans la position maximale de course d'ouverture de ce dernier.

9. Ensemble piston-cylindre selon l'une quelconque des revendications précédentes, **caractérisé en ce que** l'obturateur est sollicité dans la direction de fermeture par un ressort de pression s'appuyant contre le piston (2), notamment un ressort de pression à boudin (27) ou une rondelle-ressort.

10. Ensemble piston-cylindre selon l'une quelconque des revendications précédentes, **caractérisé en ce que** le plus grand gradin (16) du perçage à gradins (11) forme, sur le côté du piston à gradins (18, 18') qui est opposé à la chambre de travail (3, 4), une chambre d'amortissement (41) qui est reliée à la chambre de cylindre (29) par une ouverture d'amortissement (42).

11. Ensemble piston-cylindre selon la revendication 10, **caractérisé en ce que** la chambre d'amortissement (41) peut être reliée par l'intermédiaire d'une soupape à la chambre de cylindre (29) lors du déplacement du piston à gradins (18, 18') dans la direction de fermeture.

12. Ensemble piston-cylindre selon la revendication 11, **caractérisé en ce que** la soupape présente une bague d'étanchéité (36) qui est disposée dans une rainure annulaire (34) qui est formée sur la surface périphérique cylindrique du plus grand gradin (17) du piston à gradins (11), sachant que le côté de la bague d'étanchéité (36) qui est opposé à la chambre d'amortissement (41) peut être relié à la chambre de cylindre (29) et que le flux allant de la chambre de cylindre (29) à la chambre d'amortissement (41) peut passer au-dessus ou en dessous de la bague d'étanchéité (36).

13. Ensemble piston-cylindre selon l'une quelconque des revendications 9 à 12, **caractérisé en ce que** le ressort de pression est disposé dans la chambre d'amortissement (41).

14. Ensemble piston-cylindre selon l'une quelconque des revendications précédentes, **caractérisé en ce que** le plus grand gradin (16) du perçage à gradins (11) est, sur le côté du gradin correspondant (17) du piston à gradins (18, 18') qui est tourné vers la chambre de travail (3, 4), relié à la chambre de cylindre (29) par l'intermédiaire d'une ouverture d'étranglement (28).

15. Ensemble piston-cylindre selon l'une quelconque des revendications précédentes, **caractérisé en ce que** le joint d'étanchéité annulaire (30) est disposé dans une rainure annulaire qui est formée sur la surface périphérique cylindrique du piston (2).

16. Ensemble piston-cylindre selon l'une quelconque des revendications précédentes, **caractérisé en ce que** le joint d'étanchéité annulaire (30) présente une lèvre d'étanchéité (31) radialement entourante qui, par son extrémité libre, est en application élastique contre la paroi intérieure (32) du cylindre (1) en étant dirigée approximativement vers la chambre de travail (3, 4).

17. Ensemble piston-cylindre selon l'une quelconque des revendications précédentes, **caractérisé en ce qu'**au moins un perçage à gradins (13) est formé par le perçage traversant d'un tube (14) qui est dirigé vers la chambre d'amortissement (41) et dans lequel est disposé à coulissement un plus petit gradin (19) du piston à gradins (18, 18'), sachant que le tube (14) est entouré par une région du genre collet du piston à gradins (18) sur laquelle est disposé le gradin immédiatement supérieur (17) du piston à gradins (18), gradin qui entoure radialement le tube (14).

18. Ensemble piston-cylindre selon la revendication 17, **caractérisé en ce que** le tube (14) est doté, sur sa région terminale tournée vers la chambre d'amortissement (41), de fentes (15) radialement débouchantes qui constituent la liaison radiale entre deux gradins (13, 16) du perçage à gradins (11).

19. Ensemble piston-cylindre selon l'une quelconque des revendications précédentes, **caractérisé en ce que** le piston à gradins (18) est constitué d'un matériau élastomère et est réalisé d'un seul tenant avec la surface d'obturation (21) de l'obturateur (20) et/ou avec des lèvres d'étanchéité (43, 44, 45) radialement entourantes sur un ou plusieurs gradins (17, 19) du piston à gradins.

20. Ensemble piston-cylindre selon l'une quelconque des revendications précédentes, **caractérisé en ce que** le piston (2) est pourvu d'une tige de piston (5) d'un côté et présente une chambre de compensation de volume (40) destinée à recevoir la quantité déplacée de la chambre de travail (4) éloignée de la tige de piston qui dépasse la quantité déplacée par la chambre de travail (3) située du côté de la tige de piston.

21. Ensemble piston-cylindre selon la revendication 20, **caractérisé en ce que** la chambre de compensation de volume (40) est disposée dans le piston (2) entre la première et la deuxième soupape de non-retour et est reliée par une ouverture d'admission (39) à la chambre de cylindre (29) entre la première et la deuxième soupape de non-retour.

22. Ensemble piston-cylindre selon l'une quelconque des revendications précédentes, **caractérisé en ce que**, dans une première partie de la course d'ouverture de l'obturateur de la soupape de non-retour (26), le passage de soupape est un passage d'étranglement.

23. Ensemble piston-cylindre selon l'une quelconque des revendications 2 à 22, **caractérisé en ce que** le passage d'étranglement est disposé, dans la direction d'écoulement depuis la première chambre de travail (3) vers la deuxième chambre de travail (4) et/ou depuis la deuxième chambre de travail (4) vers la première chambre de travail (3), avant et/ou après le siège de soupape (22) de la soupape à siège.

24. Ensemble piston-cylindre selon les revendications 3 et 23, **caractérisé en ce que** le piston à gradins (18") présente un prolongement (52) approximativement cylindrique dirigé depuis l'obturateur (20) vers la chambre de travail (3, 4), prolongement qui fait saillie à travers le plus petit gradin (10) du perçage à gradins (11), sachant qu'un interstice annulaire (53) entre la surface périphérique entourante du prolongement (52) et la paroi intérieure du plus petit gradin (10) du perçage à gradins (11) constitue le passage d'étranglement.

25. Ensemble piston-cylindre selon la revendication 23, **caractérisé en ce que** le gradin (19') du piston à gradins (18"), gradin qui se trouve dans la direction d'écoulement depuis la première chambre de travail (3) vers la deuxième chambre de travail (4) et/ou depuis la deuxième chambre de travail (4) vers la première chambre de travail (3) après le siège de soupape (22) de la soupape à siège, présente un prolongement réalisé approximativement cylindrique qui est dirigé, dans la direction d'ouverture de la soupape de non-retour (26), à travers un collet annulaire coaxial (55) faisant saillie dans le deuxième gradin (13) du perçage à gradins (11), sachant qu'un interstice annulaire (56) entre la surface périphérique entourante du prolongement (54) et la paroi intérieure du collet annulaire (55) forme le passage d'étranglement.
